# EUROPEAN PATENT APPLICATION

(11) **EP 4 712 353 A1**
(43) Date of publication of application: **18.03.2026**
(21) Application number: 24818280.0
(22) Date of filing: 22.02.2024
(51) Int. Cl.: H04B 1/04, H04B 7/185, H04B 7/0413, H04W 36/00

(54) **DATA PROCESSING METHOD, MOBILE TERMINAL, ELECTRONIC DEVICE AND READABLE STORAGE MEDIUM**

(30) Priority: 05.06.2023 CN 202310658091
(71) Applicant: ZTE CORPORATION, Shenzhen, Guangdong 518057 (CN)
(72) Inventor: YANG, Yongxing, Shenzhen, Guangdong 518057 (CN)
(74) Representative: Ziebig Hengelhaupt Intellectual Property Attorneys Patentanwaltskanzlei PartGmbB
(86) International application number: PCT/CN2024/078135
(87) International publication number: WO 2024/250743

(57) **Abstract**

The present application discloses a data processing method, a mobile terminal, an electronic device and a readable storage medium. The method is applied to a mobile terminal and includes: acquiring data volume of transmission data; selecting target first devices from a plurality of initially selected first devices based on the data volume, each first device is a non-terrestrial device in a non-terrestrial communication network; and transmitting the transmission data to the target first devices.

## Description

### CROSS-REFERENCE TO RELATED APPLICATIONS

The present application claims priority to Chinese Patent Application No. 202310658091.7, filed on June 5, 2023, the entire contents of which are incorporated herein by reference.

### TECHNICAL FIELD

The present application relates to the field of communications, and in particular to a data processing method, a mobile terminal, an electronic device and a readable storage medium.

### BACKGROUND

Non-terrestrial devices in non-terrestrial networks (NTNs) include, but are not limited to, satellites and airborne vehicles (including, but not limited to, unmanned aircraft systems (UAS) and balloons).

In the related art, NTNs are used in special scenarios, such as deserts and oceans without terrestrial network coverage, or areas where terrestrial networks have been damaged due to special reasons. In these special scenarios, there is a demand for high transmission rates, such as the transmission of real-time video feeds. However, current mobile terminals only communicate with fixed non-terrestrial devices. This means that after establishing a communication connection with the non-terrestrial device, if the non-terrestrial device has a low transmission rate but a large amount of data needs to be transmitted, the data transmission requirements cannot be met when transmitting data through the non-terrestrial device.

Therefore, in practical applications, a solution that can meet the data transmission requirements is needed.

### SUMMARY

The main purpose of the present application is to provide a data processing method, a mobile terminal, an electronic device and a readable storage medium.

To achieve the above objective, the present application provides a data processing method applied to a mobile terminal, and the data processing method includes the following steps: acquiring data volume of transmission data; selecting target first devices from a plurality of initially selected first devices based on the data volume, wherein each of the plurality of initially selected first devices is a non-terrestrial device in a non-terrestrial communication network; and transmitting the transmission data to the target first devices.

To achieve the above objective, the present application further provides a mobile terminal, including a control chip; and a plurality of transmission channels. The control chip is connected to each of the plurality of transmission channels and is configured to process transmission data and transmit the transmission data to the plurality of transmission channels; each of the transmission channels is configured to receive the transmission data sent by the control chip and transmit the transmission data to target first devices; and one of the target first devices corresponds to one or more frequency bands, each frequency band has a corresponding transmission channel, and the target first devices is selected from a plurality of initially selected first devices based on data volume of transmission data.

To achieve the above objective, the present application further provides an electronic device, including a memory, a processor, and a data processing program stored on the memory and executable on the processor, and the data processing program is configured to implement the data processing method as described above.

To achieve the above objective, the present application further provides a computer-readable storage medium, a data processing program is stored on the computer-readable storage medium, and when the data processing program is executed by a processor, the data processing method as described above is implemented.

### BRIEF DESCRIPTION OF THE DRAWINGS

FIG. 1 is a flow chart of a data processing method according to a first embodiment of the present application.
FIG. 2 is a schematic structural diagram of a mobile terminal according to the present application.
FIG. 3 is a schematic structural diagram of a transmission channel and a reception channel in the mobile terminal according to the present application.
FIG. 4 is a functional module diagram of a data processing apparatus according to an embodiment of the present application.
FIG. 5 is a schematic structural diagram of a hardware operating environment involved in the embodiments of the present application.

### Description of reference signs:

| reference sign | name | reference sign | name |
|---|---|---|---|
| 201 | control chip | 202 | transmission channel |
| 301 | antenna | 302 | filter |
| 303 | LNA circuit | 304 | PA circuit |

The realization of the purpose, functional features and advantages of the present application will be further explained in conjunction with the embodiments and with reference to the accompanying drawings.

### DETAILED DESCRIPTION OF THE EMBODIMENTS

It should be understood that the specific embodiments described herein are merely illustrative of the present application and are not intended to limit the present application.

To better understand the embodiments of the present application, some terms involved in the embodiments are briefly explained below:
1. Low Earth Orbit (LEO) satellites have an orbital altitude ranging from 500km to 1500km, with a corresponding orbital period of approximately 1.5 to 2 hours. The signal propagation delay for single-hop communication between users is generally less than 20ms. Disadvantages include, but are not limited to: the Doppler effect caused by rapid movement must be addressed during satellite operation, and the maximum visible time is 20 minutes. Advantages include, but are not limited to: short signal propagation distance, low link loss, and low requirements for the transmission power of mobile terminals.
2. Medium Earth Orbit (MEO) satellites have an orbital altitude ranging from approximately 8000km to 18000km, with a corresponding orbital period of about 5 to 10 hours. The signal propagation delay for single-hop communication between users is generally less than 50ms. Their maximum visible time is typically several hours.
3. Geostationary Earth Orbit (GEO) satellites have an orbital altitude of approximately 36000km and an orbital period of 24 hours. The signal propagation delay for single-hop communication between users is typically 250ms.

Each satellite uses one or more fixed frequency bands selected from ultra-high frequency (UHF), L, S, C, X, Ku, and Ka.

UHF band ranges from 300 MHz to 1000 MHz; Microwave L band ranges from 1 GHz to 2 GHz; Microwave S band ranges from 2 GHz to 4 GHz; Microwave C band ranges from 4 GHz to 8 GHz; Microwave X band ranges from 8 GHz to 12 GHz; Microwave Ku band ranges from 12 GHz to 18 GHz; and Microwave Ka band ranges from 20 GHz to 40 GHz.

Airborne communication has become a research hotspot in both academia and industry. The airborne communication refers to a communication method that uses airships, drones, or balloons (airborne carriers) as wireless relays or airborne base stations in the stratosphere (20KM) to provide wireless information transmission and network coverage to ground users. The airborne carriers connect upwards to satellites and downwards to low-altitude and ground nodes, and as an airborne base station or a relay node, effectively supports an integrated air-space-ground information network and providing fast, stable, and flexible emergency communication. Therefore, the airborne carriers can also serve as a powerful supplement to satellite communication.

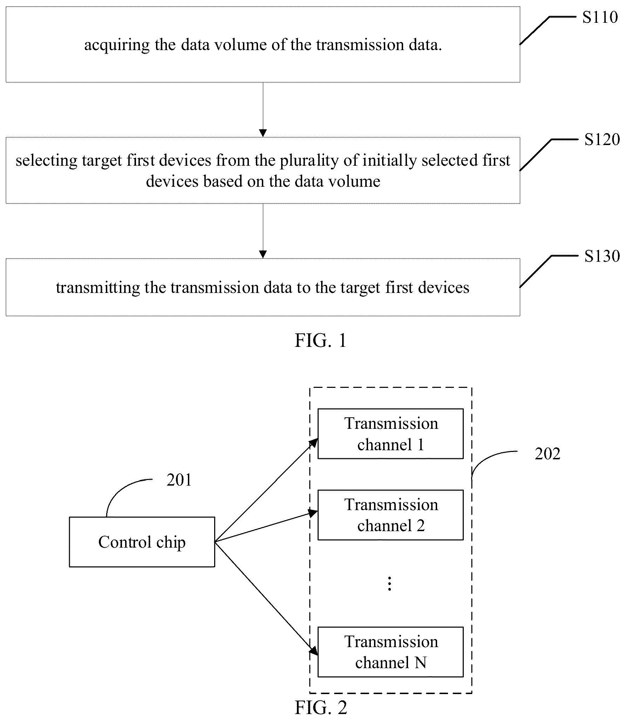

The present application provides a data processing method. Referring to FIG. 1, FIG. 1 is a flow chart of a data processing method according to a first embodiment of the present application.

The present application provides embodiments of a data processing method. Although a logical order is shown in the flowchart, in some cases, the steps shown or described may be performed in a different order than that shown here. This data processing method is applied to mobile terminals, including but not limited to handheld terminals, vehicle-mounted terminals, shipborne terminals, and aviation terminals. The handheld terminals include, but are not limited to, mobile phones and tablets. The aviation terminals are receiving and transmitting devices installed on mobile users-aircraft-to enable non-terrestrial communication networks. The data processing method includes:
Step S110, acquiring the data volume of the transmission data.

The transmission data includes, but is not limited to, short messages, voice messages, images, and videos. The data volume of video is greater than that of images, voice messages, and short messages, in that order.

The data volume determines the type or number of target first devices. The target first devices are non-terrestrial devices in a non-terrestrial communication network.

For example, the type is determined by the height of the non-terrestrial device relative to the ground, that is, by the distance between the non-terrestrial device and the mobile terminal.

For example, the types include, but are not limited to, airborne vehicles such as airships, drones or balloons, as well as low-Earth orbit satellites, medium-Earth orbit satellites and geostationary orbit satellites. The altitude of geostationary orbit satellites is greater than that of medium-Earth orbit satellites, low-Earth orbit satellites and airborne vehicles, respectively.

For geostationary orbit satellites, their position relative to the user is relatively fixed. The impact on transmission performance is mainly related to weather conditions and the state of the user's mobile terminal, such as rain, obstruction by objects, and human contact affecting transmission performance. For medium Earth orbit and low Earth orbit (LEO) satellites, their service to mobile terminals is affected by the service window, orbital altitude, and angle relative to the mobile terminal. The service window is the maximum visible time of the satellite, that is, a mobile terminal cannot be continuously served by a single LEO satellite. For airborne carriers, the user's position relative to the carrier is relatively fixed, and the distance is suitable.

For example, the quantity may include one or more, and is positively correlated with the data volume; that is, the larger the data volume, the larger the quantity, and the smaller the data volume, the smaller the quantity. The quantity can be determined by comparing the data volume with a corresponding threshold. For example, if the data volume is less than or equal to a first preset data volume threshold, the quantity is 1; if the data volume is greater than the first preset data volume threshold and less than or equal to a second preset data volume threshold, the data volume is 2; if the data volume is greater than the second preset data volume threshold and less than or equal to a third preset data volume threshold, the data volume is 3; and so on. The third preset data volume threshold is successively greater than the second preset data volume threshold and the first preset data volume threshold, and the third, second, and first preset data volume thresholds can all be set as needed, which are not limited in this embodiment.

Step S120, selecting target first devices from a plurality of initially selected first devices based on the data volume; each target first device is a non-terrestrial device in a non-terrestrial communication network.

Non-terrestrial communication networks include, but are not limited to, satellites and airborne carriers (including, but not limited to, unmanned aerial vehicle systems and balloons). Unlike terrestrial communication where mobile terminals establish communication connections with terrestrial base stations, in this embodiment, mobile terminals directly establish communication connections with non-terrestrial devices.

The basis for the mobile terminal to select a target first device from the plurality of initially selected first devices in the present application embodiment is that it supports establishing communication connections between the mobile terminals and multiple non-terrestrial devices, meaning the mobile terminal supports frequency bands from multiple satellites and/or multiple airborne carriers. A non-terrestrial device uses one or more frequency bands when transmitting data, and the mobile terminal has one or more sets of channels corresponding to each frequency band. Each set of channels includes a transmission channel and a reception channel. The transmission channel is used to transmit the transmission data, and the reception channel is used to receive data transmitted by the non-terrestrial device.

By integrating the frequency bands of multiple non-terrestrial devices onto a single mobile terminal, it enables individual or simultaneous communication operations of carriers across these multiple frequency bands. When carriers in multiple frequency bands operate simultaneously, multi-carrier links are realized, meaning the mobile terminal can simultaneously transmit corresponding transmission data to multiple non-terrestrial devices, thereby increasing the data transmission rate. Furthermore, the accessibility issue of non-terrestrial devices is resolved. That is, when one non-terrestrial device is inaccessible, the mobile terminal can still attempt to connect to other non-terrestrial devices, preventing a situation where only one non-terrestrial device is allowed access, and that device is unavailable, leaving no non-terrestrial devices available.

Since the mobile terminal in this embodiment supports frequency bands of multiple satellite systems and airborne carriers, and can support simultaneous communication, it can improve data transmission rates, thereby enabling various applications such as positioning, emergency calls, voice communication, video communication, and large-scale data transmission. This also meets people's strong demand for communication in special scenarios.

The satellite systems include, but are not limited to, Starlink and Beidou navigation satellite system (BDS). Each satellite in the satellite system uses one or more of the same frequency bands to transmit the transmission data.

For example, the aforementioned frequency bands include, but are not limited to, the frequency bands of the 3rd generation partnership project (3GPP) standard NTN, as well as the frequency bands of domestically or internationally authorized satellite systems.

As can be seen from the above, the type or quantity of the target first device can be determined based on the amount of data, and thus, based on that type or quantity, the target first device can be selected from the multiple first devices initial selected.

The following describes the process of selecting the target first devices from the plurality of initially selected first devices based on the data volume. This process involves determining the type of the target first device based on the data volume, and then selecting the target first devices from the plurality of initially selected first devices based on the type.

In this embodiment, the mobile terminal can switch between links to non-ground devices in different orbits depending on the usage scenario. For example, if the mobile terminal only needs to send location information, and the data volume of the location information is small, geostationary orbit satellites can be used for communication. While when a high data rate or high latency is required, an airborne carrier can be used for communication.

The following describes the process of selecting the target first devices from the plurality of initially selected first devices based on the data volume. This process involves determining the number of the target first device based on the data volume, and then selecting the target first device from the plurality of initially selected first devices based on that number.

In an embodiment, selecting the target first devices from the plurality of initially selected first devices based on the data volume includes: determining the number of target first devices based on the data volume; and selecting the specified number of target first devices from the plurality of initially selected first devices.

The mobile terminal can communicate with multiple first devices simultaneously, or with only one first device, determined by the data volume. As mentioned above, there is a positive correlation between the number of devices and the data volume, that is, the number of target first devices is determined by the data volume. After determining the number, that number of target first devices is selected from the plurality of initially selected first devices. For example, the mobile terminal needs to transmit the transmission data 1 and transmission data 2, and the first preset data volume threshold is 1KB and the second preset data volume threshold is 1MB. Then, if the data volume is less than or equal to the first preset data volume threshold, the number is 1. If the data volume is greater than the first preset data volume threshold but less than or equal to the second preset data volume threshold, the number is 2. Here, the transmission data 1 is a short message, the transmission data 2 is an image, and the transmission data 1 has a data volume of 15 B, while the transmission data 2 has a data volume of 500 KB. Since 15 B is less than 1 KB, and 500 KB is greater than 1 KB but less than 1 MB, meaning the data volume of the transmission data 1 is less than or equal to the first preset data volume threshold, the number corresponding to the transmission data 1 is 1. Since the data volume of the transmission data 2 is greater than the first preset data volume threshold but less than the second preset data volume threshold, the number corresponding to the transmission data 2 is 2.

For example, before selecting the target first devices from the plurality of initially selected first devices based on the data volume, the process further includes: acquiring a plurality of second signal qualities, each second signal quality corresponds to a second device to be selected, and the second device is a non-ground device; and selecting a plurality of second devices with the second signal quality greater than a second preset quality threshold as the plurality of initially selected first devices.

The plurality of initially selected first devices are obtained through screening by the mobile terminal, which in turn are selected from multiple second devices to be screened. The screening process involves: acquiring the second signal quality of the second devices, comparing the second signal quality to a second preset quality threshold, and selecting multiple second devices with a second signal quality greater than the second preset quality threshold as the plurality of first devices, while excluding second devices with a second signal quality less than or equal to the second preset quality threshold.

The magnitude of the second signal quality represents whether the mobile terminal and the second device can stably transmit data, and the two are positively correlated. That is, the higher the second signal quality, the better the stability of data transmission; the lower the second signal quality, the worse the stability of data transmission.

All the frequency bands of the second devices are supported by the mobile terminal. The second signal quality determines whether each second device is available at the current moment. That is, if the second signal quality is lower than the second preset quality threshold, establishing a communication connection between the mobile terminal and the corresponding second device becomes meaningless due to poor stability.

For example, the methods for determining the second signal quality include, but are not limited to, determining the second signal quality through the received signal level and the CN0 value. The received signal level is calculated from the signal received by the mobile terminal, and the CN0 value is the carrier-to-noise ratio, also calculated from the signal received by the mobile terminal. This signal is transmitted by a non-terrestrial device.

The second device is a connectable non-terrestrial device. This means there are also non-connectable non-terrestrial devices, that is, among the non-terrestrial devices corresponding to the frequency bands supported by the mobile terminal, besides the connectable second device, there are other non-connectable non-terrestrial devices. Connectability is determined through satellite ephemeris or detailed information from the airborne carrier. The satellite ephemeris information includes, but is not limited to, satellite altitude, satellite elevation angle, and frequency band, while detailed information includes, but is not limited to, location, altitude, and frequency band. Therefore, satellite ephemeris can be used to determine whether a mobile terminal is within the coverage area of a satellite beam at the current moment. Similarly, detailed information can be used to determine whether the mobile terminal is within the coverage area of the airborne carrier beam at the current moment.

In an embodiment, to facilitate the selection of a target first device from multiple first devices and to ensure signal quality during data transmission, during the process of determining all the first devices, the quality of each first device can be sorted by the second signal quality, and a device list containing only the plurality of initially selected first devices can be generated based on this. Therefore, when the mobile terminal selects a target first device, it can start with the first device with the highest second signal quality. That is, when the user determines that data transmission needs to be performed using satellite or a high-altitude carrier, the mobile terminal can select the first device with the best second signal quality to connect to, thereby improving the success rate and transmission speed of data transmission.

The transmission data transmitted from a mobile terminal is transmitted via a transmission channel in the mobile terminal.

For example, the operating modes of the transmission channels include, but are not limited to, enabling only the main transmission channel, enabling both the main transmission channel and the diversity transmission channel, and enabling a multiple-input multiple-output (MIMO) transmission channel.

The main transmission channel and the diversity transmission channel are relative terms. They are two unrelated paths. The mobile terminal can simultaneously transmit the same signal (with the same time, space, and polarization direction) on both the diversity transmission channel and the main transmission channel to improve the strength and stability of the signal received by non-terrestrial devices. The diversity transmission channel and the main transmission channel require different antennas to transmit data. Since the signal propagates through multiple paths, and the channel attenuation varies along each path, the attenuation is generally not severe simultaneously. After receiving the signal, the non-terrestrial device uses an algorithm to synthesize and calculate these signals, thereby improving their signal to noise ratio (SNR) and ultimately mitigating channel attenuation, thus enhancing the stability of data transmission.

In addition to transmitting data, the mobile terminal can also receive data; that is, the mobile terminal can both transmit data to the non-ground device and receive data transmitted by the non-ground device.

The mobile terminal can receive data through reception channels, similar to the main transmission channel and the diversity transmission channel. Reception channels also have the main reception channel and the diversity reception channel. Correspondingly, the diversity reception channels and the main reception channel are independent paths and can receive the same signal. The signals received by the diversity reception channel and the main reception channel are combined to improve the strength and stability of the received signal. The diversity transmission channel and the main transmission channel require different antennas for data transmission.

Multiple input multiple output transmission channels can transmit different independent data streams, that is, the multiple input multiple output transmission channels can transmit different parts of transmission data simultaneously, thereby improving the data transmission rate. For example, the MIMO transmission channel consists of 10 transmission channels. When transmitting the transmission data through these 10 channels, it's equivalent to splitting the transmission data into 10 parts, with each channel simultaneously transmitting its corresponding part. This means that compared to transmitting the transmission data using only the main transmission channel, or using both the main and diversity transmission channels, assuming the data transmission rates of all non-terrestrial devices are the same, transmitting the transmission data through the MIMO transmission channel can increase the transmission rate by 10 times. Similar to the diversity transmission channel, each MIMO transmission channel uses a separate antenna.

Step S130, transmitting the transmission data to the target first devices.

The target first device broadcasts via a beam. If the mobile terminal is within the coverage area of the beam, it can request to establish a point-to-point connection with the target first device. After establishing this connection, the mobile terminal can transmit data to the target first device.

When transmitting data to the target first device, the operating mode of the transmission channel can be determined by the first signal quality alone, or by the first signal quality and the data volume. The first signal quality corresponds to the target first device; that is, after receiving the signal transmitted by the target first device, the mobile terminal measures the received signal level or CN0 value to obtain the first signal quality.

In an embodiment, the data processing method further includes: acquiring the first signal quality, the first signal quality corresponds to the target first device; and determining the operating mode of the transmission channel provided in the mobile terminal based on the first signal quality, the transmission channel is used to transmit the transmission data.

The purpose of configuring the transmission channels with different operating modes is to ensure the stability of the target first device when receiving the transmission data transmitted from the mobile terminal, and on this basis, to accelerate the data transmission rate. That is, stability is prioritized, and data transmission rate is considered only secondarily. The diversity transmission channel is used to improve stability, while the MIMO transmission channel is used to improve the data transmission rate.

In an embodiment, determining the operating mode of the transmission channel provided in the mobile terminal based on the first signal quality includes: if the first signal quality is less than or equal to a first preset quality threshold, determining that the operating mode of the transmission channel provided in the mobile terminal is to enable the main transmission channel and the diversity transmission channel; or, if the first signal quality is greater than the first preset quality threshold, determining that the operating mode of the transmission channel provided in the mobile terminal is to enable the MIMO transmission channel.

When the first signal quality is less than or equal to a first preset quality threshold, a low first signal quality indicates poor stability during data transmission. In this case, it is necessary to improve the stability of data transmission. Therefore, stability can be improved by enabling the main transmission channel and the diversity transmission channel. When the first signal quality is greater than the first preset quality threshold, since stability is guaranteed, it is advisable to increase the data transmission rate. This means that there's no need to improve stability by enabling main and diversity transmission channels; instead, the data transmission rate can be increased by enabling the MIMO transmission channel. It can be understood that the decision logic in this embodiment is simple and can improve data processing efficiency.

In another embodiment, determining the operating mode of the transmission channel provided in the mobile terminal based on the first signal quality includes: determining the operating mode of the transmission channel provided in the mobile terminal based on the first signal quality and the data volume.

Based on the first signal quality, the operating mode of the transmission channel is also determined by the data volume. That is, besides serving as the basis for selecting the target first device from the initial selected multiple first devices, the data volume can also be used to determine the operating mode of the transmission channel. This method avoids enabling the MIMO transmission channel when the data volume is very small, as enabling the MIMO transmission channel is more energy-intensive than enabling only the main transmission channel. Therefore, to reduce the power consumption of the mobile terminal, when it is possible to enable only the main transmission channel, the main transmission channel is enabled instead of the MIMO transmission channel.

In an embodiment, determining the operating mode of the transmission channel provided in the mobile terminal based on the first signal quality and the data volume includes: if the data volume does not meet the transmission rate improvement condition and the first signal quality is greater than a first preset quality threshold, determining that the operating mode of the transmission channel provided in the mobile terminal is to enable the main transmission channel; or, if the data volume does not meet the transmission rate improvement condition and the first signal quality is less than or equal to the first preset quality threshold, determining that the operating mode of the transmission channel provided in the mobile terminal is to enable both the main transmission channel and the diversity transmission channel. Alternatively, if the data volume meets the transmission rate improvement condition and the first signal quality is less than or equal to the first preset quality threshold, the operating mode of the transmission channel provided in the mobile terminal is determined to be to enable the main transmission channel and the diversity transmission channel. Alternatively, if the data volume meets the transmission rate improvement condition and the first signal quality is greater than the first preset quality threshold, the operating mode of the transmission channel provided in the mobile terminal is determined to be to enable the MIMO transmission channel.

The transmission rate improvement condition is whether the data volume is greater than a specific value. If the data volume is greater than the specific value, it indicates that the data volume is large and meets the transmission rate improvement condition. If the data transmission rate is not increased, the mobile terminal will spend more time transmitting the transmission data, which will significantly degrade the user experience. Conversely, if the data volume is less than or equal to the specific value, it indicates that the data volume is small and does not meet the transmission rate improvement condition. In this case, even without increasing the data transmission rate, the mobile terminal will spend less time transmitting the transmission data, which will not degrade the user experience. This specific value can be set as needed, which is not limited in this embodiment.

In cases where the data volume does not meet the transmission rate improvement condition and the first signal quality is greater than the first preset quality threshold, stability can be satisfied. In this case, there is no need to consider improving stability. This means that instead of enabling the diversity transmission channel, the focus is on increasing the data transmission rate. Similarly, when the data volume does not meet the transmission rate improvement condition, there is no need to enable the MIMO transmission channel; only the main transmission channel needs to be enabled. When the data volume meets the transmission rate improvement condition and the first signal quality is greater than the first preset quality threshold, the stability can also be satisfied. However, since the data volume meets the transmission rate improvement condition, in order to reduce the time spent transmitting the transmission data, the MIMO transmission channel can be enabled.

If the data volume does not meet the transmission rate improvement condition and the first signal quality is less than or equal to the first preset quality threshold; or if the data volume meets the transmission rate improvement condition and the first signal quality is less than or equal to the first preset quality threshold. Since the first signal quality is less than or equal to the first preset quality threshold, stability cannot be satisfied, and improving stability should be prioritized. Therefore, regardless of whether the data volume meet the transmission rate improvement condition, it is necessary to prioritize enabling the main transmission channel and the diversity transmission channel to improve stability, rather than considering enabling the MIMO transmission channel to increase the data transmission rate.

Different data volumes and different first signal qualities correspond to different operating modes of the transmission channel, which improves the accuracy of determining the operating mode of the transmission channel.

The same applies to the reception channel. The operating mode of the reception channel can also be determined based on the data volume, or based on the third signal quality and the data volume received.

In an embodiment, transmitting the transmission data to a target first device includes: determining the target transmission power based on the first signal quality and the mapping relationship between the signal quality and the transmission power; and transmitting the transmission data to the target first device at the target transmission power.

After determining the operating mode of the transmission channels, the transmission power of each transmission channel can be controlled during transmission of the transmission data to the target first device, thereby achieving precise control of the transmission power and reducing the power consumption of the mobile terminal. The target first device may be one or more. During the transmission of the transmission data, a control chip controls the transmission power of the power amplifier (PA) circuit in each transmission channel, thus transmitting the data at the corresponding transmission power through the corresponding antenna. The mapping relationship is pre-set. It can be set based on experience or determined through experiments, which is not limited in this embodiment.

The transmission power should at least meet the conditions for successful transmission, i.e., stability needs to be guaranteed. It can be understood that this mapping relationship is determined under the premise of ensuring stability.

The following describes the data processing method of the present application using an embodiment.

When the data volume is small, i.e., the data volume is less than or equal to a first preset data volume threshold, a single first device can be selected for data transmission; when the data volume is large, i.e., the data volume is greater than the first preset data volume threshold, multiple first devices need to be linked for data transmission, realizing multi-carrier, multi-non-terrestrial device transmission.

Whether the operating mode of the transmission channel is determined solely by the first signal quality, or by both the first signal quality and the data volume, can be determined by the aforementioned number. When the number is 1, the operating mode of the transmission channel is determined by both the first signal quality and the data volume; when the number is greater than 1, the operating mode of the transmission channel is determined solely by the first signal quality.

Since the number is determined by the data volume, and the data volume is larger when the number is greater than 1 compared to when the number is 1, it is determined that the data volume is larger when the number is greater than 1. Therefore, when the first signal quality is greater than the first preset quality threshold, the stability is better. It is determined that the operating mode of the transmission channel provided in the mobile terminal is to enable the MIMO transmission channel to transmit the transmission data, to improve the data transmission rate and reduce the data transmission time. When the first signal quality is less than or equal to a first preset quality threshold, stability should be prioritized over increasing the data transmission rate due to poor stability. Therefore, the transmission channel can be configured to operate with both the main transmission channel and the diversity transmission channel enabled to improve stability. The first preset quality threshold can be set as needed, which is not limited in this embodiment.

Since the number is greater than 1, the transmission data needs to be allocated to the corresponding transmission channel of each target first device, and then the transmission data is transmitted through the corresponding transmission channel. During the transmission process, the data is transmitted through a standard transmission protocol, which includes, but is not limited to, hypertext transfer protocol (HTTP) and transmission control protocol (TCP). During the transmission of this data, the transmission data is broken down into multiple data packets, each of which is sent sequentially to the respective target first devices. One data packet is sent at a time. For example, if the target first devices include satellites 1, 2, and 3, and the transmission data is broken down into 10 data packets numbered 0-9, then during the transmission of these 10 data packets, packet 0 is sent to satellite 1, packet 1 to satellite 2, packet 2 to satellite 3, then packet 3 to satellite 1, packet 4 to satellite 2, and so on, until all data packets are sent.

When the number is 1, the data volume is small and there is basically no need to consider the data transmission rate. That is, when the first signal quality is less than or equal to the first preset quality threshold, stability should be prioritized over data transmission rate. In other words, regardless of whether the data volume meets the transmission rate improvement condition, the operating mode of the transmission channel is determined to be to enable the main transmission channel and the diversity transmission channel. When the first signal quality is greater than the first preset quality threshold, the stability is better and the data transmission rate can be increased. However, it is necessary to consider whether this is necessary. That is, when the data volume does not meet the transmission rate improvement condition, since the data volume is very small, there is no need to increase the data transmission rate. In this case, the operating mode of the transmission channel is to enable the main transmission channel. Furthermore, if the data volume meets the transmission rate improvement condition, since the data volume is not very small, it is advisable to increase the data transmission rate, i.e., the operating mode of the transmission channel is determined to enable the MIMO transmission channel. The specific value used to determine whether the data volume meets the transmission rate improvement condition is less than a first preset data volume threshold.

The present application embodiment realizes the determination of the target first devices from the plurality of initially selected first devices by the data volume of the transmission data. Each first device is a non-terrestrial device in a non-terrestrial communication network. That is, the non-terrestrial device in the embodiments of the present application does not only communicate with fixed non-terrestrial devices, but can determine the target first device from multiple first devices according to the data volume. That is, the target first device is dynamically matched according to the data volume. This enables the mobile terminal to meet the data transmission requirements when transmitting the transmission data to the target first device.

In addition, the present application also provides a mobile terminal. Referring to FIG. 2, FIG. 2 is a schematic structural diagram of the mobile terminal in the embodiment of the present application. The mobile terminal includes a control chip 201 and multiple transmission channels 202. The control chip 201, connected to each transmission channel 202, is configured to process the transmission data and transmit the transmission data to the transmission channels 202. Each transmission channel 202 is configured to receive the transmission data sent by the control chip 201 and transmit the transmission data to the target first device. The target first device corresponds to one or more frequency bands, each frequency band has a corresponding transmission channel 202, and the target first device is selected from the plurality of initially selected first devices based on the data volume of transmission data.

For example, the control chip 201 is configured to process data, and the data includes transmitted and received data. The control chip 201 includes one or more radio frequency transceiver chips, which are configured to transmit and receive radio frequency signals from satellites in different orbits or from airborne carriers.

For example, each transmission channel 202 includes, but is not limited to, a PA circuit, a filter, and an antenna. The PA circuit is controlled by the control chip 201, or by another control chip (a chip configured to control data transmission). This other control chip can be one or more; that is, one other control chip can control one PA circuit, or can control multiple PA circuits simultaneously. The PA circuits can operate simultaneously, thereby realizing the MIMO transmission channel mode, i.e., enabling the transmission of multiple carriers, or realizing the diversity transmission channel.

Each transmission channel 202 corresponds to a reception channel, which includes, but is not limited to, a low noise amplifier (LNA) circuit, a filter, and an antenna.

The filter is configured to remove non-target frequency bands from the signal, thus retaining the target frequency band, which is the frequency band corresponding to either the transmission channel 202 or the reception channel where the filter is located. For example, if the received signal includes both UHF and microwave L-band frequencies, and the target frequency band is the microwave L-band, the UHF band is a non-target frequency band and needs to be filtered out by a filter to retain the microwave L-band.

For example, the LNA circuit can be a single-stage or multi-stage amplifier, and multiple LNA circuits can operate simultaneously. Their operating gain and frequency range are controlled by the aforementioned control chip 201 or other control chips (configured to control data reception).

For example, each channel (including a transmission channel 202 and a corresponding reception channel) can share a single antenna or be independently connected to two different antennas, thereby achieving half-duplex or full-duplex operation.

In the case where a group of channels share a single antenna, the transmission channel 202 and the reception channel also include a switch. This switch is connected to the antenna, the PA circuit of the transmission channel 202, and the LNA circuit of the reception channel, respectively. Thus, when the transmission channel 202 needs to transmit data, the switch connects the antenna to the PA circuit and disconnects the antenna from the LNA circuit. When the transmission channel 202 does not need to transmit data, the connection between the antenna and the PA circuit is disconnected, and the antenna and the LNA circuit are connected instead.

For example, the control chip 201, other control chips, the transmission channel 202 and the reception channel mentioned above belong to radio frequency front-end devices, which can be discrete or integrated.

The basis for the embodiments of the present application to support the mobile terminal in selecting the target first devices from the plurality of initially selected first devices is that it supports the mobile terminal in establishing communication connections with multiple non-terrestrial devices, that is, the mobile terminal supports multiple satellite and/or multiple airborne carrier frequency bands. A non-terrestrial device uses one or more frequency bands when transmitting data, and the mobile terminal has one or more sets of channels corresponding to each frequency band. Each set of channels includes a transmission channel 202 and a reception channel. The transmission channel 202 is used to transmit the transmission data, and the reception channel is used to receive data transmitted by the non-terrestrial device.

By integrating the frequency bands of multiple non-terrestrial devices onto a single mobile terminal, it enables individual or simultaneous communication operation of multiple frequency band carriers. When multiple frequency band carriers are communicating simultaneously, multi-carrier links are realized, meaning the mobile terminal can simultaneously transmit the transmission data to multiple non-terrestrial devices, thereby increasing data transmission rates. Furthermore, the accessibility issue of non-terrestrial devices is resolved; that is, if one non-terrestrial device is inaccessible, the mobile terminal can still attempt to connect to other non-terrestrial devices, preventing a situation where only one non-terrestrial device is allowed access, and that device is unavailable, leaving no non-terrestrial devices available.

Since the mobile terminal in this embodiment of the present application supports frequency bands of multiple satellite systems and airborne carriers, and can support simultaneous communication, it can improve data transmission rates, thereby enabling various applications such as positioning, emergency calls, voice communication, video communication, and large-scale data transmission. This also meets the strong communication needs people have in special scenarios.

The satellite systems include, but are not limited to, Starlink and BDS. Each satellite in the satellite system uses one or more of the same frequency bands to transmit the transmission data.

For example, the aforementioned frequency bands include, but are not limited to, the frequency bands of the 3GPP standard NTN, as well as the frequency bands of domestic or foreign authorized satellite systems.

Since the mobile terminal includes multiple transmission channels 202 corresponding to multiple frequency bands, and these multiple frequency bands correspond to multiple initially selected first devices, the mobile terminal has the ability to communicate with multiple first devices. This allows the mobile terminal to select any one or more transmission channels 202 to transmit the transmission data after the control chip 201 processes the transmission data, thereby transmitting the transmission data to a target first device. The target first device may include one or more first devices. This enables the mobile terminal to select the target first device based on the data volume.

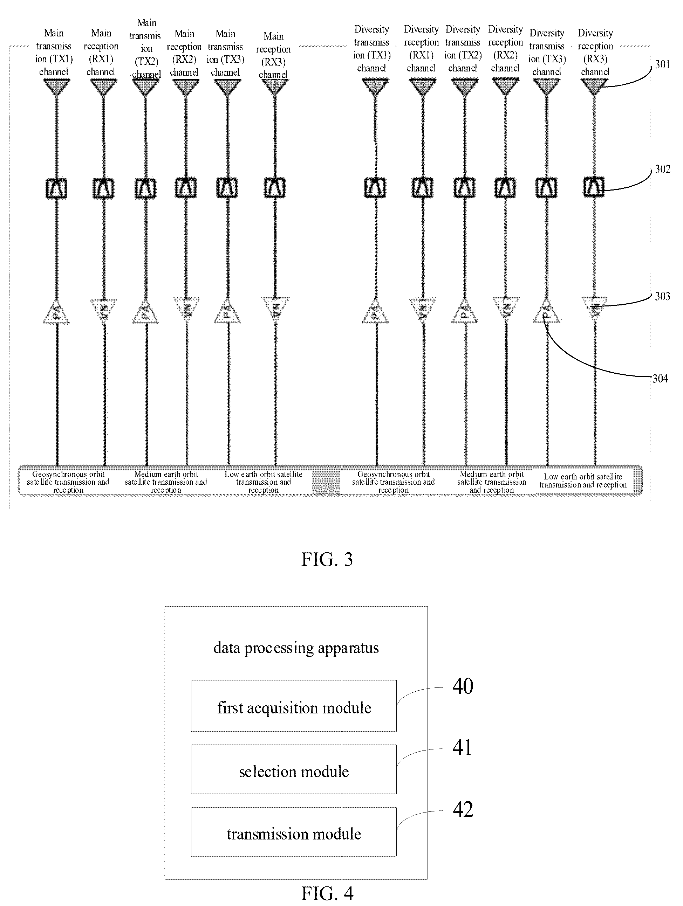

Referring to FIG. 3, the transmission channel 202 and the reception channel are described below using an embodiment.

301 is an antenna, 302 is a filter, 303 is an LNA circuit, and 304 is a PA circuit. For satellites in different orbits, there are two sets of channels corresponding to them. The frequency bands differ depending on the orbit. These two sets of channels are the main transmission/reception channel and the transmit/receive diversity channel. The main transmission/reception channel includes the receive main channel (i.e., the receive main channel) and the transmit main channel (i.e., the transmit main channel), such as the Receive (RX) 1 main channel and the Transmit (TX) 1 main channel in FIG. 3. The transmit/receive diversity channel includes the receive diversity channel and the transmit diversity channel, such as the diversity reception (RX) 2 channel and the diversity transmission (TX) 2 channel in FIG. 3. During the process of transmitting the transmission data, if the data volume is less than or equal to a first preset data volume threshold, the first signal quality is less than or equal to a first preset quality threshold, and the target first device is a low-orbit satellite, the transmission data is transmitted through both the TX3 main channel and the TX3 diversity channel, and the transmitted content is the same.

In the embodiment of the present application, the mobile terminal includes a control chip 201 and multiple transmission channels 202. The control chip 201 is connected to each transmission channel 202 and is configured to process the transmission data and transmit the transmission data to the transmission channels 202. Each transmission channel 202 is configured to receive the transmission data transmitted by the control chip 201 and transmit the transmission data to the target first device. The target first device corresponds to one or more frequency bands, and each frequency band has a corresponding transmission channel 202. The target first devices are selected from the plurality of initially selected first devices based on the data volume of the transmission data. In other words, the mobile terminal in the embodiment of the present application does not only communicate with fixed non-ground devices, but can determine the target first device from multiple first devices based on the data volume. That is, the target first device is matched dynamically based on the data volume, which enables the mobile terminal to meet the data transmission requirements when transmitting the transmission data to the target first device.

Furthermore, referring to FIG. 4, the present application also provides a data processing apparatus, including: a first acquisition module, a selection module and a transmission module.

The first acquisition module is configured to acquire the data volume of the transmission data.

The selection module is configured to select the target first devices from the plurality of initially selected first devices based on the data volume. Each first device is a non-terrestrial device in a non-terrestrial communication network.

The transmission module is configured to transmit the transmission data to the target first devices.

For example, the selection module is configured to determine the number of target first devices based on the data volume; and select a number of target first devices from the plurality of initially selected first devices.

For example, the data processing apparatus further includes a second acquisition module and a determination module.

The second acquisition module is configured to acquire a first signal quality, the first signal quality corresponds to a target first device.

The determination module is configured to determine the operating mode of a transmission channel provided in the mobile terminal based on the first signal quality, the transmission channel is used to transmit the transmission data.

For example, the determination module is configured to:
determine, when the first signal quality is less than or equal to a first preset quality threshold, that the operating mode of the transmission channel provided in the mobile terminal is to enable the main transmission channel and the diversity transmission channel; or
determine, when the first signal quality is greater than the first preset quality threshold, that the operating mode of the transmission channel provided in the mobile terminal is to enable the MIMO transmission channel.

For example, the determination module is further configured to determine the operating mode of the transmission channel provided in the mobile terminal based on the first signal quality and the data volume.

For example, the determination module is further configured to:
determine that the operating mode of the transmission channel provided in the mobile terminal is to enable the main transmission channel when the data volume does not meet the transmission rate improvement condition and the first signal quality is greater than a first preset quality threshold; or
determine that the operating mode of the transmission channel provided in the mobile terminal is to enable both the main transmission channel and the diversity transmission channel when the data volume does not meet the transmission rate improvement condition and the first signal quality is less than or equal to the first preset quality threshold; or
determine that the operating mode of the transmission channel provided in the mobile terminal is to enable both the main transmission channel and the diversity transmission channe when the data volume meets the transmission rate improvement condition and the first signal quality is less than or equal to the first preset quality threshold; or
determine that the operating mode of the transmission channel provided in the mobile terminal is to enable the MIMO transmission channel when the data volume meets the transmission rate improvement condition and the first signal quality is greater than the first preset quality threshold.

For example, the transmission module is configured to:
determine the target transmission power based on the first signal quality and the mapping relationship between the signal quality and the transmission power; and
transmit the transmission data to the target first device at the target transmission power.

For example, the data processing apparatus includes a third acquisition module.

The third acquisition module is configured to acquire multiple second signal qualities, and select multiple second devices with second signal qualities greater than a second preset quality threshold as the plurality of initially selected first devices. Each second signal quality corresponds to a candidate second device, and the second device is a non-ground device.

The embodiments of the data processing apparatus in the present application is basically the same as that of the above-described data processing method, and will not be repeated here.

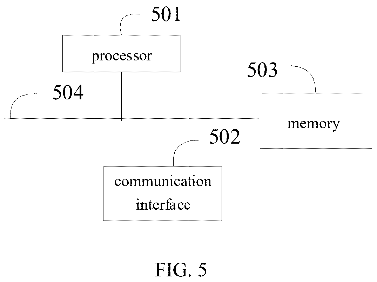

In addition, the present application also provides an electronic device. As shown in FIG. 5, FIG. 5 is a schematic diagram of the hardware operating environment involved in the embodiment of the present application.

For example, FIG. 5 can be a schematic structural diagram of the hardware operating environment of an electronic device.

As shown in FIG. 5, the electronic device may include a processor 501, a communication interface 502, a memory 503, and a communication bus 504. The processor 501, the communication interface 502 and the memory 503 communicate with each other via the communication bus 504. The memory 503 is used to store a computer program. The processor 501 is used to perform the steps of the data processing method when executing the program stored in the memory 503.

The communication bus 504 described in the above electronic device can be a peripheral component interconnect (PCI) bus or an extended industry standard architecture (EISA) bus, etc. This communication bus 504 can be divided into an address bus, a data bus, and a control bus, etc. For ease of illustration, it is represented by only one thick line in the figure, but this does not indicate that there is only one bus or one type of bus.

The communication interface 502 is used for communication between the above-mentioned electronic device and other devices.

The memory 503 may include random access memory (RAM) or non-volatile memory (NVM), such as at least one disk storage device. In an embodiment, the memory 503 may also be at least one storage device located remotely from the aforementioned processor 501.

The aforementioned processor 501 may be a general-purpose processor, including a central processing unit (CPU), a network processor (NP), etc.; or may be a digital signal processor (DSP), an application-specific integrated circuit (ASIC), a field-programmable gate array (FPGA), or other programmable logic devices, discrete gate or transistor logic devices, or discrete hardware components.

The embodiment of the electronic device in the present application is basically the same as that of the data processing method described above, and will not be repeated here.

Furthermore, the present application also proposes a computer-readable storage medium on which a data processing program is stored. When the data processing program is executed by a processor, the steps of the data processing method described above are implemented.

The embodiments of the computer-readable storage medium in the present application is basically the same as that of the data processing method described above, and will not be repeated here.

It should be noted that in this document, the terms "comprise", "include" or any other variants thereof are intended to cover a non-exclusive inclusion. Thus, a process, method, article, or system that includes a series of elements not only includes those elements, but also includes other elements that are not explicitly listed, or also includes elements inherent to the process, method, article, or system. If there are no more restrictions, the element defined by the sentence "including a..." does not exclude the existence of other identical elements in the process, method, article or system that includes the element. In addition, the terms "first", "second" and "third" are used for descriptive purposes only and should not be construed as indicating or implying relative importance.

The above serial numbers of the embodiments of the present application are only for description and do not represent the advantages or disadvantages of the embodiments.

Through the description of the above embodiments, those skilled in the art can clearly understand that the methods of the above embodiments can be implemented by means of software plus a necessary general-purpose hardware platform, and of course also by hardware, but in many cases the former is better implementation. Based on this understanding, the essence of the technical solution of the present application or the part that contributes to the prior art can be embodied in the form of software products, the computer software product is stored in one of the above storage medium (such as ROM/RAM, magnetic disk, optical disk), including several instructions to make a terminal device (which may be a mobile phone, a computer, a server, or a network device, etc.) execute the method of each embodiment of the present application.

The above are only some embodiments of the present application, and are not therefore limiting the scope of the present application. Any equivalent structure or equivalent process transformation made by using the contents of the specification and drawings of the present application, or directly or indirectly used in other related technical fields, is also included in the scope of the present application.

## Claims

1. A data processing method, applied to a mobile terminal, the data processing method **characterized by** comprising:
acquiring data volume of transmission data;
selecting target first devices from a plurality of initially selected first devices based on the data volume, wherein each of the plurality of initially selected first devices is a non-terrestrial device in a non-terrestrial communication network; and
transmitting the transmission data to the target first devices.

2. The data processing method according to claim 1, wherein selecting the target first devices from the plurality of initially selected first devices based on the data volume comprises:
determining a number of the target first devices based on the data volume; and
selecting the number of target first devices from the plurality of initially selected first devices.

3. The data processing method according to claim 1, further comprising:
acquiring a first signal quality, wherein the first signal quality corresponds to the target first devices; and
determining an operating mode of a transmission channel provided in the mobile terminal based on the first signal quality, wherein the transmission channel is configured to transmit the transmission data.

4. The data processing method according to claim 3, wherein determining the operating mode of the transmission channel provided in the mobile terminal based on the first signal quality comprises:
in response to that the first signal quality is less than or equal to a first preset quality threshold, determining that the operating mode of the transmission channel provided in the mobile terminal is to enable a main transmission channel and a diversity transmission channel; or
in response to that the first signal quality is greater than the first preset quality threshold, determining that the operating mode of the transmission channel provided in the mobile terminal is to enable a multiple-input multiple-output transmission channel.

5. The data processing method according to claim 3, wherein determining the operating mode of the transmission channel provided in the mobile terminal based on the first signal quality comprises:
determining the operating mode of the transmission channel provided in the mobile terminal based on the first signal quality and the data volume.

6. The data processing method according to claim 5, wherein determining the operating mode of the transmission channel provided in the mobile terminal based on the first signal quality and the data volume comprises:
in response to that the data volume does not meet a transmission rate improvement condition and the first signal quality is greater than a first preset quality threshold, determining that the operating mode of the transmission channel provided in the mobile terminal is to enable a main transmission channel; or
in response to that the data volume does not meet the transmission rate improvement condition and the first signal quality is less than or equal to the first preset quality threshold, determining that the operating mode of the transmission channel provided in the mobile terminal is to enable both the main transmission channel and a diversity transmission channel; or
in response to that the data volume meets the transmission rate improvement condition and the first signal quality is less than or equal to the first preset quality threshold, determining that the operating mode of the transmission channel provided in the mobile terminal is to enable both the main transmission channel and the diversity transmission channel; or
in response to that the data volume meets the transmission rate improvement condition and the first signal quality is greater than the first preset quality threshold, determining that the operating mode of the transmission channel provided in the mobile terminal is to enable a multiple-input multiple-output transmission channel.

7. The data processing method according to claim 3, wherein transmitting the transmission data to the target first devices comprises:
determining a target transmission power based on the first signal quality and a mapping relationship between a signal quality and a transmission power; and
transmitting the transmission data to the target first devices at the target transmission power.

8. The data processing method according to claim 1, wherein before selecting the target first devices from the plurality of initially selected first devices based on the data volume, the method further comprises:
acquiring multiple second signal qualities, wherein each of multiple second signal qualities corresponds to a second device to be selected, and the second device is a non-ground device; and
selecting a plurality of the second devices with second signal qualities greater than a second preset quality threshold as the plurality of initially selected first devices.

9. A mobile terminal, **characterized by** comprising:
a control chip; and
a plurality of transmission channels,
wherein the control chip is connected to each of the plurality of transmission channels and is configured to process transmission data and transmit the transmission data to the plurality of transmission channels;
each of the transmission channels is configured to receive the transmission data sent by the control chip and transmit the transmission data to target first devices; and
one of the target first devices corresponds to one or more frequency bands, each frequency band has a corresponding transmission channel, and the target first devices is selected from a plurality of initially selected first devices based on data volume of transmission data.

10. The mobile terminal according to claim 9, wherein each of the one or more frequency bands corresponds to at least two of the plurality of transmission channels.

11. An electronic device, **characterized by** comprising: a memory, a processor, and a data processing program stored on the memory and executable on the processor, wherein the data processing program is configured to implement the data processing method according to any one of claims 1 to 8.

12. A computer-readable storage medium, **characterized in that** a data processing program is stored on the computer-readable storage medium, and when the data processing program is executed by a processor, the data processing method according to any one of claims 1 to 8 is implemented.
